# FASCICULE DE BREVET EUROPEEN

(11) **EP 2 948 665 B1**
(45) Date de publication et mention de la délivrance du brevet: **24.06.2020**
(21) Numéro de dépôt: 14703284.1
(22) Date de dépôt: 21.01.2014
(51) Int. Cl.: F02K 9/78, B64G 1/40

(54) **SYSTÈME DE CONDITIONNEMENT DE CIRCUITS CRYOGÉNIQUES**
KÄLTEKREISLAUF-KONDITIONIERUNGSSYSTEM
CRYOGENIC CIRCUIT CONDITIONING SYSTEM

(30) Priorité: 22.01.2013 FR 1350561
(43) Date de publication de la demande: 02.12.2015
(73) Titulaire: ArianeGroup SAS, 75015 Paris (FR)
(72) Inventeur: DUTHEIL, Jean-Phillipe, F-33127 Martignas-sur-Jalle (FR); HAMEURY, Marie-Sophie, F-92100 Boulogne Billancourt (FR)
(74) Mandataire: Brevalex
(86) Numéro de dépôt international: PCT/EP2014/051099
(87) Numéro de publication internationale: WO 2014/114628

(56) Documents cités:
- EP-A1- 2 354 622
- WO-A1-2014/105335
- GB-A- 2 196 393
- US-A- 2 959 023
- US-A1- 2008 060 523

## Description

### Arrière plan de l'invention

### Domaine de l'invention

La présente invention concerne un système de conditionnement et de balayage de circuits d'ergols cryogéniques d'un aéronef.

Dans le cadre de la présente invention, on entend par aéronef tout véhicule adapté à se déplacer dans l'atmosphère terrestre et dans l'espace et comportant au moins un circuit de fluide cryogénique notamment d'alimentation d'un moteur fusée. Il peut s'agir notamment d'un aéronef à vol mixte aérodynamique et spatial mono-étage, tel que décrit dans le document FR 2 907 422 A1 au nom de la demanderesse ou dans le document GB 2196393, d'un véhicule bi-étage ou d'un véhicule comportant un avion porteur et un avion spatial lancé à partir de l'avion porteur.

### Arrière plan technologique

Les circuits d'ergols cryogéniques utilisés pour les propergols de moteurs fusée, tuyauteries et dispositifs annexes notamment de lanceurs ou d'aéronefs spatiaux, ne peuvent être laissés en contact avec de l'air ambiant du fait que l'humidité de cet air gèle au contact de ces circuits.

Dans le cas de circuits très basse température, par exemple des circuits comprenant de l'hydrogène liquide, l'oxygène de l'air va en outre pouvoir se liquéfier et s'accumuler avec les risques d'explosions et d'incendie associés que cela implique.

De même, il est nécessaire d'évacuer les gaz issus de fuites éventuelles sur ces circuits et d'éviter toute contamination de l'environnement des circuits par ces gaz.

Pour éviter ces problèmes il est connu de faire circuler de l'azote ou de l'hélium en continu et à pression supérieure à la pression atmosphérique autour de ces circuits tant que le véhicule est au sol. Un tel procédé de protection des circuits cryogéniques par balayage d'un gaz s'appelle conditionnement.

Les lanceurs spatiaux utilisant des systèmes de propulsion à propergols cryogéniques ont un temps de vol à travers l'atmosphère qui est très court de l'ordre de quelques dizaines de secondes ce qui limite le temps d'exposition à l'air atmosphérique des circuits pendant ce vol.

Le contrôle et le conditionnement de l'environnement des circuits cryogéniques est donc réalisé au sol, dès avant le remplissage des réservoirs, au moyen d'un circuit de conditionnement raccordé au lanceur. Ce conditionnement se poursuit jusqu'au décollage du lanceur mais les dispositifs d'alimentation en gaz de conditionnement sont déconnectés au décollage du lanceur.

Le circuit de conditionnement réalise un balayage continu des zones du lanceur contenant les circuits et réservoirs cryogéniques par de l'azote sec dans le cas où la propulsion n'utilise pas d'hydrogène liquide ou de l'hélium lorsque de l'hydrogène est utilisé, l'azote ou l'hélium provenant d'une installation au sol.

Les circuits de conditionnement assurent en outre une collecte des ergols issus de fuites.

Ils n'ont par contre plus besoin d'être alimenté pendant le vol atmosphérique des lanceurs car la montée rapide de ces véhicules à travers l'atmosphère conduit à la vidange des compartiments internes du fait de la chute rapide de pression extérieure.

Cette chute de pression fait qu'il n'y a en outre pas de pénétration d'air extérieur dans les compartiments concernés de ces aéronefs.

C'est tout à fait différent pour un aéronef de type avion spatial utilisant une propulsion à moteur fusée utilisant des ergols liquides cryogénique LOx/Méthane liquide ou semi-cryogénique avec de l'oxygène liquide.

En effet, un avion spatial va avoir une phase de croisière de plusieurs dizaine de minutes dans l'atmosphère et il devient nécessaire de continuer le balayage et le conditionnement des circuits d'ergols cryogéniques pendant le vol atmosphérique.

Un tel dispositif et le gaz de conditionnement associé deviennent très pénalisant en masse sèche tant du fait des réservoirs de stockage que de la masse de gaz de conditionnement.

### Brève description de l'invention

La présente invention a pour objet un système qui prélève de l'air extérieur et qui en extrait l'azote pour réaliser le conditionnement des circuits cryogéniques au moins pendant la phase de vol atmosphérique de l'aéronef.

Cette invention permet d'éviter d'embarquer et de stocker le gaz de conditionnement à bord du véhicule.

Pour ce faire la présente invention propose, selon la première revendication, un dispositif de conditionnement en vol d'équipements de circuits cryogéniques d'un aéronef comportant des moyens de prélèvement d'air extérieur à l'aéronef et des moyens d'extraction d'azote de cet air au moyen d'un séparateur d'azote de type OBIGGS et des moyens de distribution de cet azote autour desdits composants.

Les moyens de distribution comprennent avantageusement des moyens surpresseurs.

Le dispositif de conditionnement comprend des moyens de distribution de l'azote autour des différents équipements des circuits cryogéniques de l'aéronef par un circuit de tuyauteries muni d'orifices calibrés.

Le dispositif comprend des moyens d'encapsulation desdits équipements pour recevoir l'azote de conditionnement.

Le dispositif de l'invention est avantageusement adapté à distribuer l'azote autour des équipements des circuits cryogéniques au moins pendant une phase de vol atmosphérique de l'aéronef.

Les moyens de prélèvement sont aptes à être situés sur un étage de compresseur d'un moteur à turbine dont est équipé l'aéronef.

Selon un mode de réalisation alternatif et non revendiqué, les moyens de prélèvement aspirent directement de l'air extérieur à l'aéronef.

Le dispositif comporte des moyens d'assèchement dans le circuit en aval du séparateur.

Selon un mode de réalisation particulier, le dispositif complète un dispositif de circulation d'azote ou d'hélium externe à l'aéronef utilisé lorsque l'aéronef est au sol.

L'invention s'applique en particulier à un aéronef comportant un moteur fusée utilisant un ou plusieurs ergols cryogéniques.

L'aéronef est en particulier de type avion spatial comportant une double propulsion moteur aérobie à turbine et moteur fusée.

L'invention propose en outre, selon la revendication 7, un procédé de conditionnement d'équipements de circuits cryogéniques d'un aéronef qui comporte une première étape de conditionnement au sol des équipements de circuits cryogéniques de l'aéronef au moyen d'un circuit de conditionnement externe raccordé à l'aéronef et une seconde étape de conditionnement en vol desdits équipements au moyen d'un dispositif à séparateur d'azote de l'invention.

### Brève description des dessins

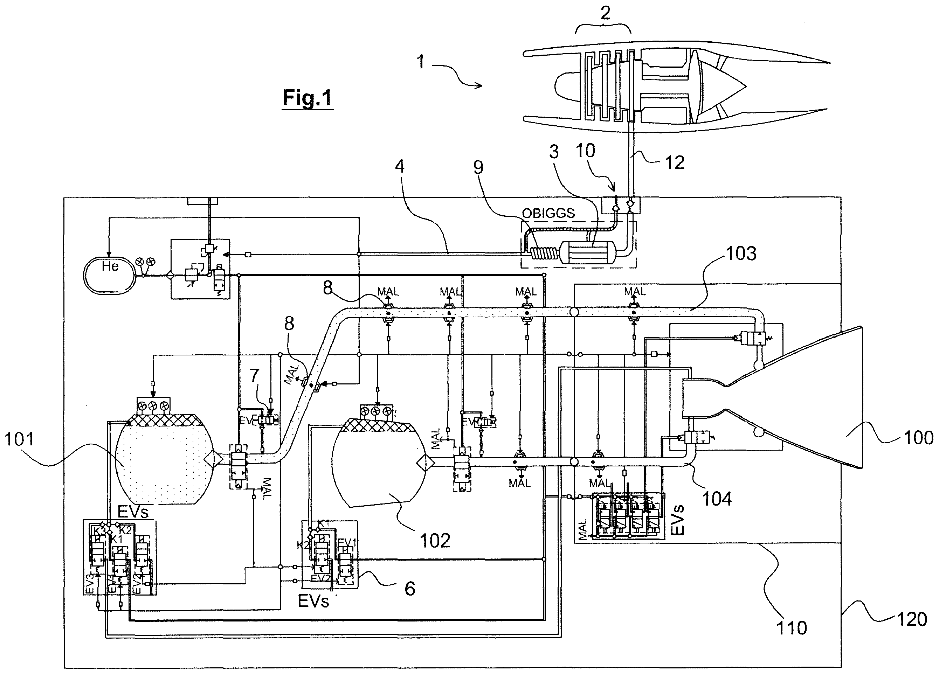

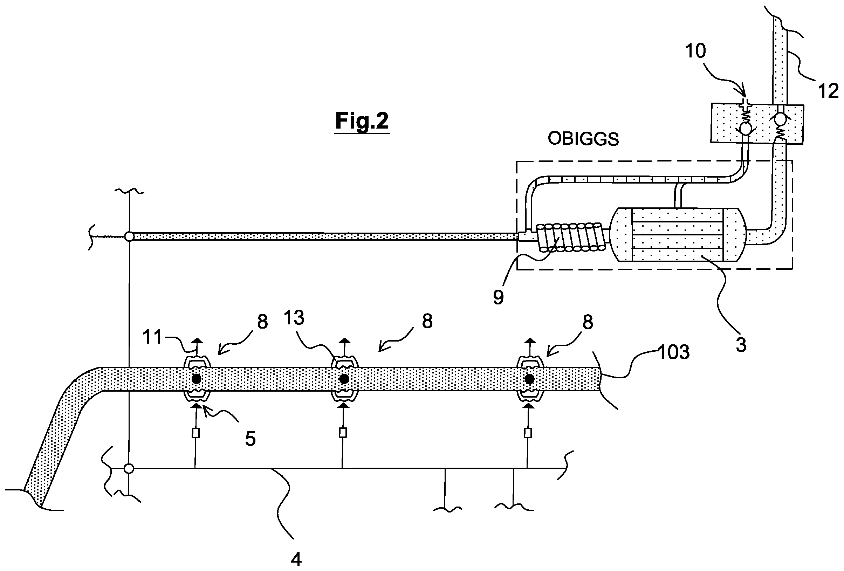

D'autre caractéristiques et avantages de l'invention seront apparents à la lecture de la description qui suit d'exemples de réalisation non limitatifs de l'invention en référence aux dessins qui représentent:
en figure 1 une vue schématique d'un aéronef muni d'un dispositif selon un mode de réalisation de l'invention;
en figure 2: un détail de la figure 1.

### Description détaillée de modes de réalisation de l'invention

Le dispositif de l'invention a pour objectif d'éliminer l'humidité et l'oxygène de l'environnement des circuits d'ergols cryogéniques pour la propulsion d'un aéronef à moteur fusée de type avion spatial par un remplissage de compartiments comportant ces circuits par de l'azote restant gazeux aux températures de liquéfaction des carburants et comburants utilisés.

Ce remplissage ou conditionnement évite notamment la détérioration d'équipements tels que des vannes, de compensateurs mécaniques et d'autres dispositifs tels que des soufflets ou rotules lorsque ces équipements se chargent de glace du fait de l'humidité ambiante.

Selon l'exemple représenté en figure 1, le dispositif comporte des moyens de prélèvement d'air sous forme d'une entrée de prélèvement d'air sur un étage de compresseur 2 du moteur aéronautique 1 dont est équipé un avion spatial et comporte un séparateur d'azote 3 de type OBIGGS pour "On Board Inert Gas Generator System" en anglais c'est à dire en français un système de génération de gaz inerte embarqué qui peut notamment comporter un filtre moléculaire à membrane.

Les dispositifs OBIGGS sont des dispositifs connus fournis selon les besoins des clients notamment par la société française Air Liquide.

Les moyens de prélèvement sont ici situés sur un dernier étage de compresseur du moteur à turbine 1 dont est équipé l'aéronef.

Le choix de l'étage de compresseur dépend de la pression nécessaire pour le prélèvement de gaz.

En variante le prélèvement peut être fait à l'extérieur du véhicule par une bouche d'entrée d'air et les moyens de prélèvement aspirent dans ce cas directement de l'air extérieur à l'aéronef.

Il est en outre possible de disposer un échangeur de chaleur sur le circuit de prélèvement pour refroidir l'air prélevé avant qu'il entre dans l'OBIGGS.

L'air dont est extrait l'azote est rejeté à l'extérieur de l'aéronef par une soupape 10.

Le séparateur d'azote 3 est suivi éventuellement par un compresseur et le flux d'azote est dirigé dans un circuit de distribution 4 pour réaliser le conditionnement et distribuer l'azote autour des différents équipements véhiculant des fluides cryogéniques.

Les moyens de distribution comprennent un circuit de tuyauteries et des orifices calibrés au niveau des dispositifs à conditionner pour délivrer une quantité d'azote correspondant aux besoins selon les volumes à remplir.

Le critère de conception de ces orifices est que compte tenu du débit de l'OBIGGS, les orifices sont calibrés pour maintenir les zones conditionnées en surpression par rapport à leur environnement en sorte d'empêcher l'entrée d'oxygène et d'air humide ambiant autour des circuits cryogéniques.

Il est à noter que la pression extérieure à l'aéronef diminuant avec l'altitude, le besoin en surpression diminue aussi ce qui permet éventuellement de limiter le débit demandé au dispositif.

La séparation réalisée par le dispositif OBIGGS est normalement adaptée à délivrer de l'azote à suffisamment faible taux d'humidité et taux d'oxygène mais un dispositif d'assèchement peut être éventuellement ajouté dans le circuit, ce dispositif comportant une évacuation de l'eau vers l'extérieur de l'aéronef par une soupape 10 par exemple.

Le dispositif de l'invention qui n'utilise pas de réservoir d'azote embarqué procure un gain de masse important et donc un gain de performances par rapport à un aéronef qui emporterait le gaz de conditionnement.

Pour limiter le volume d'azote à générer, les différents équipements fluides cryogéniques vannes, filtres, compensateurs sont encapsulés dans des coffrages dans lesquels est fait le balayage d'azote.

Les tuyauteries sont par exemple des tuyauteries à double paroi avec circulation d'azote entre leur paroi interne et leur paroi externe.

Dans le cas d'une paroi externe isolante thermique, l'azote et la paroi externe isolent thermiquement les tuyauteries.

Il est à noter que de façon à ne pas avoir à fournir un volume trop important d'azote avec les moyens embarqués, le dispositif de l'invention vient avantageusement en complément d'un dispositif au sol de circulation d'azote externe à l'aéronef avec lequel est préalablement rempli le volume de conditionnement.

De cette manière, le dispositif de l'invention n'a plus qu'à compenser les pertes du circuit une fois l'aéronef en vol et à distribuer l'azote autour des circuits cryogéniques pendant la phase de vol atmosphérique de l'aéronef en remplacement du volume d'azote s'échappant du circuit.

Il est à noter que l'invention n'est pas applicable pour un circuit carburant cryogénique renfermant de l'hydrogène liquide car dans ce cas l'azote qui va geler ne peut être utilisé.

L'invention s'applique par exemple à un avion spatial mono-véhicule avec double propulsion turboréacteur et moteur fusée.

La figure 1 représente un exemple schématique d'un tel aéronef comportant un dispositif de l'invention.

L'aéronef est pourvu d'un turboréacteur 1, sur lequel est prélevé l'air servant à extraire l'azote, est pourvu d'un moteur fusée 100 et de réservoirs 101 102 d'ergols cryogéniques distribués au moteur fusée par des tuyauteries 103, 104.

L'interface fuselage de l'aéronef est schématisé par l'encadrement 120 et l'environnement moteur fusée est schématisé par l'encadrement 110.

La fonction de balayage/conditionnement en vol atmosphérique est réalisée par prélèvement 12 d'air extérieur compressé, en aval du compresseur 2 du turboréacteur 1 de l'avion spatial, puis séparation de l'azote au moyen d'un équipement de type OBIGGS 3.

L'azote est alors amené à très faible taux d'humidité et d'oxygène par un circuit de tuyauteries 4 comportant notamment selon la figure 2 des orifices 5 de distribution de gaz calibrés de manière appropriée pour distribuer l'azote autour des différents équipements 6, 7, 8 des circuits cryogéniques par exemple: électrovannes 6, 7 filtres ou compensateurs, cardans 8 sur les tuyauteries d'ergols cryogéniques 103, 104.

Les équipements qui ne sont pas incorporés dans des boîtiers sont encapsulés dans des manchons 13 pour permettre de réduire le volume du fluide de conditionnement nécessaire.

Selon l'exemple, le dispositif OBIGGS 3 est suivi de moyens d'assèchement 9 et la sortie de gaz humides 10 s'échappe à l'extérieur de l'aéronef.

En fin de circuit, un échappement 11 de l'azote de conditionnement se fait au niveau des composants encapsulés 6, 7, 8 de sorte qu'il y a toujours un balayage de gaz autour de ces composants.

La conception du circuit, les volumes des manchons 13 et le calibrage des orifices 5 de distribution du gaz et des fuites permettent un contrôle des pressions afin d'assurer que le débit du gaz de conditionnement se fait dans le sens source OBIGGS vers le ou les échappements du circuit de conditionnement sans entrée d'air ambiant dans les zones à protéger.

On notera que si l'aéronef est bi-étage, avec un premier étage comportant le turboréacteur, et le second étage le moteur fusée, il faut prévoir sur la ligne 12 un dispositif automatique de connexion/déconnexion qui effectuera une déconnexion et une fermeture des circuits lors de la séparation des étages.

Il en est de même pour un système avec avion porteur et avion spatial lancé à partir de l'avion porteur.

Outre la prévention de gel et de dépôts de glace sur les équipements ou composants des circuits cryogéniques réalisé par le conditionnement procuré par le dispositif de l'invention, ce conditionnement s'accompagne aussi d'un effet de régulation thermique; par exemple en maintenant en température certains équipements électriques sensibles. Ceci est réalisé par le gaz utilisé qui s'oppose au refroidissement dû au voisinage des lignes cryogéniques tout au long du vol atmosphérique de l'aéronef.

L'invention n'est pas limitée à l'exemple représenté et notamment selon un mode de réalisation particulier, l'humidité résiduelle dans l'azote peut être condensée par passage sur un échangeur avec les lignes ergol à température cryogénique et collectée ou solidifiée dans une zone adaptée. L'azote refroidi limite ainsi les échanges thermiques avec les ergols lors de son utilisation dans le circuit de conditionnement.

## Revendications

1. Dispositif de conditionnement en vol d'équipements (6, 7, 8) de circuits cryogéniques véhiculant des fluides cryogéniques depuis un ou des réservoirs vers le ou les moteurs d'un aéronef **caractérisé en ce qu'**il comporte :
- des moyens de prélèvement d'air extérieur à l'aéronef, lesdits moyens de prélèvement d'air étant aptes à être situés sur un étage de compresseur (2) d'un moteur à turbine (1) dont est équipé l'aéronef,
- des moyens d'extraction d'azote de cet air au moyen d'un séparateur d'azote de type OBIGGS (3),
- des moyens de distribution (4, 5) de cet azote autour desdits équipements, lesdits moyens de distribution de l'azote comprenant un circuit de tuyauteries (4) muni d'orifices calibrés (5), en sorte de balayer lesdits équipement avec l'azote, lesdits orifices étant calibrés pour maintenir les équipements conditionnés en surpression par rapport à leur environnement,
- des moyens d'encapsulation (13) desdits équipements (6, 7, 8) pour recevoir l'azote de conditionnement, et
- des moyens d'assèchement (9) dans le circuit en aval du séparateur.

2. Dispositif de conditionnement selon la revendication 1 pour lesquels les moyens de distribution comprennent des moyens surpresseurs.

3. Dispositif de conditionnement selon l'une quelconque des revendications 1 ou 2 adapté à distribuer l'azote de conditionnement autour des équipements des circuits cryogéniques au moins pendant une phase de vol atmosphérique de l'aéronef.

4. Dispositif de conditionnement selon l'une quelconque des revendications précédentes **caractérisé en ce qu'**il complète un dispositif au sol de circulation d'azote ou d'hélium externe à l'aéronef.

5. Aéronef comportant un moteur fusée (100) utilisant un ou plusieurs ergols cryogéniques **caractérisé en ce qu'**il comporte un dispositif de conditionnement selon l'une quelconque des revendications précédentes.

6. Aéronef selon la revendication 5 de type avion spatial **caractérisé en ce qu'**il comporte une double propulsion moteur aérobie à turbine (1) et moteur fusée (100).

7. Procédé de conditionnement d'équipements de circuits cryogéniques d'un aéronef **caractérisé en ce qu'**il comporte une première étape de conditionnement au sol des équipements de circuits cryogéniques de l'aéronef au moyen d'un circuit de conditionnement externe raccordé à l'aéronef et une seconde étape de conditionnement en vol desdits équipements au moyen d'un dispositif selon l'une quelconque des revendications 1 à 4

## Patentansprüche

1. Vorrichtung zur Konditionierung von Einrichtungen (6, 7, 8) kryogener Kreisläufe während des Fluges, welche Kreisläufe kryogene Fluide von einem oder mehreren Tanks zu dem bzw. den Motor(en) eines Luftfahrzeugs befördern,
**dadurch gekennzeichnet, dass** sie enthält:
- Mittel zum Aufnehmen von Luft von außerhalb des Luftfahrzeugs, wobei diese Luftaufnahmemittel sich an einer Verdichterstufe (2) eines Turbinentriebwerks (1) befinden können, mit dem das Luftfahrzeug ausgerüstet ist,
- Mittel zur Extraktion von Stickstoff aus dieser Luft mit Hilfe eines Stickstoffabscheiders vom Typ OBIGGS (3),
- Mittel (4, 5) zur Verteilung dieses Stickstoffs um die Einrichtungen herum, wobei die Mittel zur Verteilung des Stickstoffs einen Rohrleitungskreislauf (4) umfassen, der mit kalibrierten Öffnungen (5) versehen ist, um die Einrichtungen mit Stickstoff zu fluten, wobei die Öffnungen so kalibriert sind, dass sie die konditionierten Einrichtungen unter Überdruck gegenüber ihrer Umgebung halten,
- Mittel (13) zum Einkapseln der Einrichtungen (6, 7, 8) zum Aufnehmen von Konditionierungsstickstoff, und
- Entwässerungsmittel (9) im Kreislauf nach dem Abscheider.

2. Konditionierungsvorrichtung nach Anspruch 1,
wobei die Verteilungsmittel Booster-Mittel enthalten.

3. Konditionierungsvorrichtung nach einem der Ansprüche 1 oder 2,
wobei sie dazu ausgelegt ist, den Konditionierungsstickstoff zumindest während einer Atmosphärenflugphase des Luftfahrzeugs um die Einrichtungen der kryogenen Kreisläufe herum zu verteilen.

4. Konditionierungsvorrichtung nach einem der vorangehenden Ansprüche,
**dadurch gekennzeichnet, dass**
sie eine bodengestützte, luftfahrzeugexterne Stickstoff- oder Heliumzirkulationsvorrichtung ergänzt.

5. Luftfahrzeug mit einem Raketentriebwerk (100), bei dem ein oder mehrere kryogene Treibstoffe Verwendung finden,
**dadurch gekennzeichnet, dass**
es eine Konditionierungsvorrichtung nach einem der vorangehenden Ansprüche umfasst.

6. Luftfahrzeug nach Anspruch 5 vom Typ Raumflugzeug,
**dadurch gekennzeichnet, dass**
es ein Doppelantriebssystem mit einem aeroben Turbinentriebwerk (1) und einem Raketentriebwerk (100) umfasst.

7. Verfahren zur Konditionierung von Einrichtungen kryogener Kreisläufe eines Luftfahrzeugs,
**dadurch gekennzeichnet, dass**
es einen ersten Schritt der bodenseitigen Konditionierung der Einrichtungen kryogener Kreisläufe des Luftfahrzeugs mittels eines externen Konditionierungskreislaufs, der mit dem Luftfahrzeug verbunden ist, und einen zweiten Schritt der Konditionierung dieser Einrichtungen während des Flugs mittels einer Vorrichtung nach einem der Ansprüche 1 bis 4 umfasst.

## Claims

1. A device for in-flight conditioning equipments (6, 7, 8) of cryogenic circuits conveying cryogenic fluids from one or more tanks to the engine(s) of an aircraft **characterised in that** it includes:
- means for collecting air external to the aircraft, said air collecting means being able to be located on a compressor stage (2) of a turbine engine (1) with which the aircraft is equipped,
- means for extracting nitrogen from this air by means of an OBIGGS type nitrogen separator (3),
- means for dispensing (4, 5) this nitrogen about said equipments, said nitrogen dispensing means comprising a piping circuit (4) provided with calibrated orifices (5), so as to flush said equipments with nitrogen, said orifices being calibrated to keep the equipments supercharge conditioned with respect to their environment,
- means for encapsulating (13) said equipments (6, 7, 8) to receive conditioning nitrogen, and
- drying-up means (9) in the circuit downstream of the separator.

2. The conditioning device according to claim 1, wherein the dispensing means comprise supercharger means.

3. The conditioning device according to any of claims 1 to 2, adapted to dispense conditioning nitrogen about the equipments of the cryogenic circuits at least during an atmospheric flight phase of the aircraft.

4. The conditioning device according to any of the preceding claims, **characterised in that** it completes a ground device for circulating nitrogen or helium external to the aircraft.

5. An aircraft including a rocket engine (100) using one or more cryogenic propellants **characterised in that** it includes a conditioning device according to any of the preceding claims.

6. The aircraft according to claim 5, of the aerospace plane type **characterised in that** it includes an airbreathing turbine engine (1) and rocket engine (100) double propulsion.

7. A method for conditioning equipments of cryogenic circuits of an aircraft **characterised in that** it includes a first step of ground conditioning equipments of cryogenic circuits of the aircraft by means of an external conditioning circuit connected to the aircraft and a second step of in-flight conditioning said equipments by means of a device according to any of claims 1 to 4.
